(19) Europäisches Patentamt
European Patent Office
Office européen des brevets

(11) **EP 4 174 117 A1**

(12) **EUROPEAN PATENT APPLICATION**
published in accordance with Art. 153(4) EPC

(43) Date of publication:
**03.05.2023 Bulletin 2023/18**

(21) Application number: **21833401.9**

(22) Date of filing: **17.06.2021**

(51) International Patent Classification (IPC):
*C08J 5/18* [(2006.01)]      *B29C 55/12* [(2006.01)]
*H01M 4/64* [(2006.01)]      *H01M 4/66* [(2006.01)]

(52) Cooperative Patent Classification (CPC):
**B29C 55/12; C08J 5/18; H01M 4/64; H01M 4/66;**
**Y02E 60/10**

(86) International application number:
**PCT/JP2021/023086**

(87) International publication number:
**WO 2022/004414 (06.01.2022 Gazette 2022/01)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **30.06.2020 JP 2020112857**

(71) Applicant: **TOYOBO CO., LTD.**
**Osaka-shi**
**Osaka 5300001 (JP)**

(72) Inventors:
• **NISHIO, Shotaro**
  **Tsuruga-shi, Fukui 914-8550 (JP)**
• **SHIMIZU, Akira**
  **Tsuruga-shi, Fukui 914-8550 (JP)**

(74) Representative: **Vossius & Partner**
**Patentanwälte Rechtsanwälte mbB**
**Siebertstraße 3**
**81675 München (DE)**

(54) **BIAXIALLY STRETCHED POLYPHENYLENE SULFIDE FILM AND SECONDARY BATTERY ELECTRODE FILM COMPOSED OF SAME**

(57)     Provided is a polyphenylene sulfide film which is superior in productivity of battery production, can thin an electrode material and a substrate, and has an increased battery capacity. A polyphenylene sulfide film being formed of a polyphenylene sulfide resin composition and comprising at least one layer, wherein the polyphenylene sulfide film has a thickness of 0.2 um or more and 30 um or less,
the polyphenylene sulfide film has a tensile elongation at break of 30% or more and 150% or less in each of an MD direction and a TD direction,
a relationship between the tensile elongation at break in the MD direction and the tensile elongation at break in the TD direction satisfies a formula (1), and
the polyphenylene sulfide film has a heat shrinkage rate at 180°C for 30 minutes of 4% or less in both the MD direction and the TD direction,

$$0.75 \leq SMD/STD \leq 1.25 \qquad (1)$$

In the formula (1), SMD represents the tensile elongation at break in the MD direction, and STD represents the tensile elongation at break in the TD direction.

EP 4 174 117 A1

**Description**

TECHNICAL FIELD

The present invention relates to a biaxially stretched polyphenylene sulfide film, a secondary battery electrode, and a film to be used therefor. More specifically, the present invention relates to a polyphenylene sulfide film having superior productivity in battery production, being capable of thinning an electrode material and a substrate, and having an increased battery capacity. Further, the present invention relates to a secondary battery electrode and a secondary battery electrode which are lighter than conventional products owing to use of the film of the present invention.

BACKGROUND ART

In recent years, with the downsizing of electric and electronic devices, downsizing of batteries to be used for the electric and electronic devices is required, and with the development of portable electric and electronic devices, increase in capacity and elongation in life of batteries are required. As the structure of the battery, there is employed a structure formed by winding an electrode in which an electrode material is laminated on a metal foil 10 to 30 um in thickness with a sheet-like separator interposed therebetween. By thinning the electrodes and the separators, it is expected to downsize of batteries, increase the battery capacity, and elongate the life of batteries.

However, there is a limit to the extent of thinning while maintaining characteristics such as the process handleability and the folding resistance of the electrode and also maintaining the piercing resistance so as not to lead to conduction due to penetration of the electrode by a nail or the like. Moreover, since the amount of metal to be used does not change, the battery weight cannot be reduced.

Then, as a new material that can substitute for metal, the present inventors have proposed to use, as an electrode substrate having a current collector function, a material having a configuration in which a conductive thin film layer of metal or the like is provided on a surface of a biaxially stretched polyester thin film superior in mechanical properties and thermal dimensional stability

(Patent Documents 1 and 2).

When a biaxially stretched polyester film is used as an electrode substrate of an energy storage device, it is necessary to provide a conductive thin film layer on both sides of the film, and the conductive thin film layer is often provided by a method such as vacuum vapor-deposition, electroplating, or sputtering. For example, vacuum vapor-deposition is a technique in which a laminating substance, such as metal, that has been heated and vaporized is solidified and attached to a film substrate close attached to a cooling roll in a vacuum chamber; however, if slipperiness of the film is insufficient or a surface of the film is excessively rough, the close attachment to the cooling roll is often unsuccessful.

PRIOR ART DOCUMENTS

PATENT DOCUMENTS

    Patent Document 1: JP-A-10-40919
    Patent Document 2: JP-A-10-40920

SUMMARY OF THE INVENTION

PROBLEMS TO BE SOLVED BY THE INVENTION

As one of the solutions, it is conceivable to provide a thin metal film on a surface of a plastic film strengthened. However, the temperature may rise due to an increase in the resistance value caused by a decrease in the metal film thickness, and it is assumed that conventional plastic films are inferior in durability of batteries. In the case of a polyester film, resistance to an electrolytic solution tends to be low, and there is a problem that a battery life cannot be kept long.

Under such circumstances, an object of the present invention is to provide a biaxially stretched polyphenylene sulfide film which is superior in heat resistance, capable of further thinning a thin metal film, capable of affording a required battery capacity, and suitable for production of a battery member having an improved life.

Further, another object of the present invention is to provide a secondary battery electrode that is lighter than conventional products and a film to be used for the secondary battery electrode.

MEANS FOR SOLVING THE PROBLEMS

According to the present invention, achievement of a object is done by a biaxially stretched polyphenylene sulfide film being formed of a polyphenylene sulfide resin and comprising at least one layer, in which the biaxially stretched polyphenylene sulfide film has a thickness of 0.2 um or more and 30 um or less,

the biaxially stretched polyphenylene sulfide film has a tensile elongation at break of 30% or more and 150% or less in each of an MD direction and a TD direction,
a relationship between the tensile elongation at break in the MD direction and the tensile elongation at break in the TD direction satisfies a formula (1), and
the biaxially stretched polyphenylene sulfide film has a heat shrinkage rate at 180°C for 30 minutes of 4% or less in both the MD direction and the TD direction,

$$0.75 \leq SMD/STD \leq 1.25 \qquad\qquad (1)$$

in the formula (1), SMD represents the tensile elongation at break in the MD direction, and STD represents the tensile elongation at break in the TD direction.

In addition, the present invention also provides the following embodiments.

[2] One embodiment is directed to the biaxially stretched polyphenylene sulfide film described above, in which

the polyphenylene sulfide resin composition further includes inert particles,
the inert particles are contained in an amount of 500 ppm or more and 20000 ppm or less based on a weight of the polyphenylene sulfide resin, and
both surfaces of the biaxially stretched polyphenylene sulfide film have a center surface average roughness SRa of 5 nm or more and 70 nm or less and a ten-point average roughness SRz of 200 nm or more and 950 nm or less, and
SRa and SRz satisfy a formula (2).

$$10 \leq SRz/SRa \leq 50 \qquad\qquad (2)$$

[3] One embodiment is directed to the biaxially stretched polyphenylene sulfide film described above, in which

a Young's modulus in the MD direction and a Young's modulus in the TD direction are each 3500 MPa or more and 5500 MPa or less, and
a relationship between the Young's modulus in the MD direction and the Young's modulus in the TD direction satisfies a formula (3).

$$0.75 \leq YMD/YTD \leq 1.25 \qquad\qquad (3)$$

In the formula (3), YMD represents the Young's modulus in the MD direction and YTD represents the Young's modulus in the TD direction.
[4] One embodiment is directed to the biaxially stretched polyphenylene sulfide film described above, having a density of 1.340 g/dl or more.
[5] One embodiment is directed to the biaxially stretched polyphenylene sulfide film described above, in which the biaxially stretched polyphenylene sulfide film has a melting peak temperature in DSC measurement of 250°C or higher.
[6] One embodiment is directed to a secondary battery electrode film, further including a thin metal film on at least one surface of the biaxially stretched polyphenylene sulfide film described above.
[7] One embodiment is directed to a secondary battery electrode, in which the secondary battery electrode film described above further includes an electrode material.

EFFECT OF THE INVENTION

The present invention is a polyphenylene sulfide film which has a high tensile elongation at break and a small MD-TD difference in tensile elongation at break, and thus is less likely to be broken or perforated, and for example, is superior in productivity for battery production.

MODE FOR CARRYING OUT THE INVENTION

The biaxially stretched polyphenylene sulfide film of the present invention can be used, for example, for a secondary battery electrode film. The secondary battery produced using the present invention has a battery capacity improved by thinning an electrode material substrate (electrode substrate), and has a high melting peak temperature and a low heat shrinking property as the electrode material substrate. In addition, since the biaxially stretched film is used, a short circuit due to thermal deformation of the electrode material substrate is prevented, and the battery life is improved.

Moreover, a secondary battery produced using the film of the present invention is lighter than a conventional product using a metal foil as an electrode material substrate (electrode substrate), and also has a high weight energy density.

The biaxially stretched polyphenylene sulfide of the present invention has a film thickness of 0.2 um or more and 30 um or less. When the film has such a thickness, the energy density, especially the volume energy density, of an energy storage device is improved when the film is used as a substrate film for an energy storage device electrode. Folding resistance can be imparted.

When a thick film exceeding the upper limit value is used as an electrode substrate, the electrode substrate is thicker than conventional metal foils, which does not lead to improvement in the energy density, especially volume energy density, of an energy storage device. On the other hand, when the film thickness is so thin as to be less than the lower limit value, it is extremely difficult to produce the film.

Therefore, the present invention has the above-described thickness from the viewpoint of improvement of the energy density, especially volume energy density, of an energy storage device and efficiency of film production.

The film thickness is more preferably 0.2 um or more and 20 um or less, still more preferably 0.2 um or more and 12 um or less, and particularly preferably 0.5 um or more and 10 um or less. Even when the biaxially stretched polyphenylene sulfide film of the present invention has a laminated structure including a coextruded layer, a coating layer, or the like, it is preferable that the thickness of the laminated structure is in such a range.

When the tensile elongation at break of the biaxially stretched film in each of the MD direction and the TD direction is 30% or more and 150% or less, the workability of producing a battery by laminating and winding electrode materials is further improved. If it is less than 30%, there is a possibility that a trouble such as breakage may occur at the time of producing a battery, which is unfavorable. The tensile elongation at break in the MD direction and that in the TD direction may be the same or different as long as they are within the above range.

For example, the tensile elongation at break in each of the MD direction and the TD direction may be 40% or more and 140% or less.

In the present invention, the relationship between the tensile elongation at break in the MD direction and the tensile elongation at break in the TD direction satisfies the following formula (1).

$$0.75 \leq SMD/STD \leq 1.25 \qquad\qquad (1)$$

In the formula (1), SMD represents the tensile elongation at break in the MD direction, and STD represents the tensile elongation at break in the TD direction.

The tensile elongation at break in the MD direction is preferably in a range of 75% to 125% with respect to the tensile elongation at break in the TD direction. Further preferably, the range is 80% to 120%, that is, $0.80 \leq SMD/STD \leq 1.20$, and more preferably 85% to 119%, that is, $0.85 \leq SMD/STD \leq 1.19$.

If the difference between the tensile elongation at break in the MD direction and the tensile elongation at break in the TD direction is excessively large, decrease in puncture strength due to the orientation of the molecular chain being biased in one direction is likely to occur and causes formation of pinholes and the like, which is unfavorable. In the present invention, when the tensile elongation at break in the MD direction is within the above-mentioned range with respect to the tensile elongation at break in the TD direction, it is possible to control the decrease in puncture strength, to control formation of pinholes, and to enhance resistance to an electrolytic solution, and also to maintain a battery life longer than before. When the SMD/STD value is within the above range, good folding resistance can be imparted.

When the Young's modulus of the biaxially stretched film in each of the MD direction and the TD direction is 3500 MPa or more and 5500 MPa or less, the workability of producing a battery by laminating and winding electrode materials is further improved. When the Young's modulus is 3500 MPa or more, it is possible to control the occurrence of wrinkles and folds in a battery production step. When the Young's modulus is 5500 MPa or less, film formability can be improved.

For example, the Young's moduli in the MD direction and the TD direction have a relationship of the following formula (3).

$$0.75 \leq YMD/YTD \leq 1.25 \qquad (3)$$

In the formula (3), YMD represents the Young's modulus in the MD direction and YTD represents the Young's modulus in the TD direction.

The Young's modulus in the MD direction is preferably in a range of 75% to 125% with respect to the Young's modulus in the TD direction. That is, the formula (3) has a relationship of $0.75 \leq YMD/YTD \leq 1.25$. Further preferably, the range is 80% to 120% and the formula (3) is $0.80 \leq YMD/YTD \leq 1.20$, more preferably the range is 85% to 115% and the formula (3) is $0.85 \leq YMD/YTD \leq 1.15$.

If the difference between the Young's modulus in the MD direction and the Young's modulus in the TD direction is excessively large, a decrease in puncture strength due to the orientation of the molecular chain being biased in one direction tends to occur and formation of pinholes or the like is caused, which is unfavorable. On the other hand, in the present invention, since the Young's modulus in the MD direction and the Young's modulus in the TD direction have the above relationship, it is possible to control a decrease in puncture strength, to control formation of pinholes, and to enhance resistance to an electrolytic solution, and also to maintain a battery life longer than before. When the YMD/YTD value is within the above range, good folding resistance can be imparted.

The biaxially stretched film has a heat shrinkage rate at 180°C for 30 minutes of 4% or less in both the MD direction and the TD direction. The heat shrinkage rate is more preferably 3.5% or less, and still more preferably 3% or less. If the heat shrinkage rate is excessively high, when a secondary battery is produced, thermal deformation of an electrode that occurs when heat is generated by internal resistance causes a short circuit, which is not preferable. The heat shrinkage rates in the MD direction and the TD direction may be substantially equal to or different from each other.

The biaxially stretched film in the present invention is required to have a film surface roughened by adding, it is necessary to roughen the film surface by adding particles inert to a polymer (inert particles) as a roughening agent as long as the effect of the present invention is not impaired. As to the surface roughness of the film, a center surface average roughness SRa is preferably 5 nm or more and 70 nm or less, and more preferably 6 nm or more and 65 nm or less.

In addition, a ten-point average roughness SRz is preferably 200 nm or more and 950 nm or less, and more preferably 250 nm or more and 900 nm or less. If the SRa is less than 5 nm and the SRz is less than 200 nm, the conveyability of the film is significantly deteriorated, which is unfavorable. In addition, if the SRa exceeds 70 nm and the SRz exceeds 950 nm, it is difficult to attain appropriate close contact with a cooling roll during vapor-deposition, which is unfavorable. Therefore, in the present invention, owing to having the above roughness, the conveyability can be further improved, and appropriate close contact with a cooling roll during vapor-deposition can be favorably provided.

In addition, the surface roughness is required to satisfy the following formula (2). Owing to satisfying the following formula, the air releasability at the time of winding the film into a roll is improved, and wrinkles and folds in the roll can be controlled.

$$10 \leq SRz/SRa \leq 50 \qquad (2)$$

In one embodiment, the formula (2) can take the following aspects. $10 \leq SRz/SRa \leq 40$, or $12 \leq SRz/SRa \leq 38$

Owing to taking such a value, the air releasability at the time of winding the film into a roll is further improved, and wrinkles and folds in the roll can be more effectively controlled.

The roughening agent is preferably fine particles preferably having an average particle size of 0.05 to 5 um. Preferably, the fine particles are inert particles. The addition amount is preferably 500 ppm or more and 20,000 ppm or less, more preferably 1000 ppm or more and 15000 ppm or less, and still more preferably 1500 ppm or more and 10000 ppm or less.

Examples of the roughening agent include calcium carbonate, magnesium carbonate, barium carbonate, barium sulfate, calcium phosphate, lithium phosphate, magnesium phosphate, lithium fluoride, aluminum oxide, silicon oxide (silica), titanium oxide, kaolin, talc, carbon black, silicon nitride, boron nitride, and crosslinked polymer fine particles (for example, fine particles of crosslinked polystyrene, crosslinked acrylic resin, or crosslinked silicone resin). These may be used singly or two or more of them may be used in combination. Preferably, the roughening agent is inert particles inert to a polymer.

As a method for incorporating such a roughening agent, an external particle addition method is used in which inert inorganic or organic fine particles are added to a polymer in any of a polymer production step, a masterbatch preparation step, and a film formation step.

The biaxially stretched polyphenylene sulfide film in the present invention has a melting peak temperature in DSC heating measurement of 250°C or higher, preferably 260°C or higher, and more preferably 270°C or higher. The melting peak temperature is, for example, 300°C or lower.

Owing to the condition that the melting peak temperature is 250°C or higher, for example, in use in a secondary battery, when heat generation due to internal resistance occurs, thermal deformation of an electrode can be controlled and a short circuit can be prevented.

The polyphenylene sulfide resin referred to in the present invention is preferably a homopolymer, but may be a copolymer. In addition, a polymer blend comprising two or more of such homopolymers and/or copolymers may be used.

The biaxially stretched film in the present invention can be produced according to a conventionally known method. For example, a raw material polymer is fully dried under prescribed conditions, then supplied to a well-known melt extrusion apparatus (represented by an extruder), and heated to a temperature equal to or higher than a polymer melting point (Tm: °C), especially a temperature of Tm or higher and (Tm + 70)°C or lower to melt. In this extrusion step, the raw material polymer is melt-kneaded so as to be uniform, and the degree of melt-kneading is adjusted.

Subsequently, the melt-kneaded polymer is extruded through a slit-shaped die lip into a sheet, and rapidly cooled and solidified on a rotary cooling drum, affording an un-stretched sheet in a substantially amorphous state. In this case, in order to enhance adhesion to the rotary cooling drum and improve the surface flatness (planarity and smoothness) of the sheet, an electrostatic pinning method and/or a liquid coating method is preferably employed. The electrostatic pinning method is a method in which a direct current voltage is applied to a linear electrode stretched in a direction perpendicular to a flow of a sheet extruded through a die to place an electrostatic charge on a surface (non-drum side) of the sheet and adhesion between the sheet and a rotary cooling drum is improved by this action. The liquid coating method is a method of improving adhesion between a sheet and a rotary cooling drum by uniformly applying a liquid to the whole or part (for example, a portion to be in contact with both end portions of the sheet) of the surface of the rotary cooling drum. In the present invention, both the methods may be used in combination, as necessary. As a method for producing an un-stretched sheet in a substantially amorphous state, an inflation casting method or a casting method may also be employed.

The un-stretched sheet thus obtained is then biaxially stretched to form a biaxially stretched film. As a method for this stretching, a sequential biaxial stretching method (a tenter method) or a simultaneous biaxial stretching method (a tenter method or a tube method) can be used. As stretching conditions in the sequential biaxial stretching method, the un-stretched sheet is stretched to 2 to 6 times, preferably 2.5 to 5.5 times, in one direction (the machine direction or the transverse direction) at a temperature of (Tg - 10) or higher and (Tg + 70)°C or lower (where Tg is the highest glass transition temperature), and then stretched to 2 to 6 times, preferably 2.5 to 5.5 times, in a direction perpendicular to the direction of the first stage (when the first stage stretching is in the machine direction, the second stage stretching is in the transverse direction) at a temperature of Tg or higher and (Tg + 70)°C or lower. Although a method in which stretching in one direction is performed in two or more stages may be used, in that case as well, the final stretch ratio is desirably within the above-mentioned range. After an intermediate heat treatment following the second stage stretching, the film may be stretched again in the same direction as the first stage and/or in the same direction as the second stage. The un-stretched sheet may also be simultaneously biaxially stretched to an area magnification of 6 to 30 times, preferably 8 to 25 times.

The difference in stretch ratio between the MD direction and the TD direction is preferably smaller. If the difference in stretch ratio between the MD direction and the TD direction is excessively large, the difference in Young's modulus between the MD direction and the TD direction is excessively large, which is unfavorable. The stretch ratio in the TD direction is preferably set within a range of 0.7 to 1.5 times the stretch ratio in the MD direction.

A biaxially stretched film thus obtained is subjected to heat treatment, as necessary, and this heat treatment is preferably performed at a temperature of 200°C or higher and 280°C or lower for 1 second to 10 minutes. At this time, the heat treatment may be performed under a limited contraction or extension within 20% or under a constant length, and may be performed in two or more stages.

In one embodiment, the biaxially stretched film of the present invention has a density of 1.340 g/dl or more, for example, the density of 1.40 g/dl or less.

When the density is within such a range, crystallization is sufficiently promoted, and an effect of controlling heat shrinkage can be exhibited.

The biaxially stretched film of the present invention may be subjected to surface processing for the purpose of improving adhesion to a thin metal film. The surface processing method is not particularly limited, but preferable examples thereof include application of an easily adhering agent layer, corona treatment, and plasma treatment. Such surface treatment may be performed during the step of forming the biaxially stretched film, or may be performed in a step different from the film formation step. Among them, it is preferable to perform during the film formation step.

Since the biaxially stretched film in the present invention is to be used as a secondary battery electrode film, the biaxially stretched film may have a thin metal film on at least one surface thereof. Examples of the metal forming the thin film include aluminum, nickel, gold, silver, copper, and cadmium, but the metal is not particularly limited as long as the metal is conductive for the purpose of the present invention. The thickness of the thin metal film is usually in a range of 1 to 1000 nm, but is preferably 10 to 1000 nm for the purpose of controlling heat generation caused by internal resistance of a battery. Preferable examples of the method for producing the thin metal film include methods such as a vacuum vapor-deposition method, an electroplating method, and a sputtering method.

The secondary battery electrode film of the present invention can be formed into a secondary battery electrode by further laminating an electrode material on the thin metal film surface. As the electrode material, conventionally known electrode materials, such as lithium cobalt oxide and graphite, can be used. Further, a secondary battery can be produced by a conventionally known method using the secondary battery electrode. For example, in the case of producing a lithium ion secondary battery, the secondary battery can be formed by using a secondary battery electrode film having a copper sputtered film and being coated lithium cobalt oxide as a positive electrode and a secondary battery electrode film having an aluminum vapor-deposited film and being coated with graphite as a negative electrode; winding the electrodes with a separator made of a polyethylene microporous film interposed therebetween; and using, as an electrolytic solution, an organic solvent dissolving a lithium salt.

EXAMPLES

Hereinafter, the present invention will be described in detail with reference to Examples, but the present invention is not limited to the following Examples as long as the gist of the present invention is not exceeded. Physical property values and characteristics in the present invention are measured and defined as described below.

(1) Film thickness

A film sample was nipped in a spindle gauge head (K107C manufactured by Anritsu Electric Co., Ltd.). Using a digital differential electronic micrometer (K351 manufactured by Anritsu Electric Co., Ltd.), a thickness was measured at 10 different positions, and an average value thereof was calculated and taken as a film thickness.

(2) Tensile elongation at break, Young's modulus

A tensile elongation at break is determined by sampling a film into a size 10 mm wide and 150 mm long, pulling the film at a distance between chucks of 100 mm and a speed of 10 mm/min using a well-known tensile tester, and reading a strain (%) at the time of break. (Unit: %)

A Young's modulus is determined by sampling a film into a size 10 mm wide and 150 mm long, pulling the film at a distance between chucks of 100 mm and a speed of 10 mm/min using a well-known tensile tester, and determining a Young's modulus from a tangent of a rising portion of a load-elongation curve obtained (unit: MPa).

(3) Heat shrinkage rate at 180°C

A dimensional change rate (%) in each of the machine direction and the transverse direction were measured in accordance with JIS C 2318-1997 5.3.4 (Dimensional Change).

(4) Surface roughness

Using a probe type three-dimensional roughness meter (SE-3AK, manufactured by Kosaka Laboratory Ltd.) under the conditions including a needle radius of 2 $\mu$m and a load of 30 mg, an outermost layer surface of a biaxially stretched film was measured in a longitudinal direction of the film at a cutoff value of 0.25 mm over a measurement length of 1 mm at a needle feed speed of 0.1 mm/sec and then divided into 500 points at a pitch of 2 um, and the height of each point was taken into a three-dimensional roughness analyzer (SPA-11). The same operation as this was continuously performed 150 times at intervals of 2 um in a transverse direction of the film, that is, over 0.3 mm in the transverse direction of the film, and the data was taken into the analyzer. Next, a center surface average roughness (SRa) and a ten-point average roughness (SRz) were determined using the analyzer.

(5) Average particle size of roughening agent

A roughening agent was observed with a scanning electron microscope (Model S-51O, manufactured by Hitachi, Ltd.), and the magnification was appropriately changed according to the size of particles, and a photograph taken was enlarged and copied. Subsequently, for at least 200 or more randomly selected particles, the outer periphery of each particle was traced. The equivalent circle diameters of the particles were measured from the trace images with an image analyzer, and the average thereof was taken as an average particle size.

(6) Melting peak temperature (Tm)

A film (10 mg) is set in a thermal analysis system SSC/5200, DSC5200 manufactured by Seiko Instruments Inc., and heated at a temperature raising rate of 20°C/min in a nitrogen gas stream. Then, an endothermic behavior accompanying melting of the film is analyzed by first differentiation and second differentiation to determine a temperature at which a peak or a shoulder appears, and this temperature is defined as a melting peak temperature (unit:°C).

(7) Density

The density was measured in accordance with a method (density gradient tube method) complying with JIS K 7112: 1999. (Unit: g/cm$^3$).

(8) Battery capacity

A lithium ion secondary battery is produced using a film and subjected to continuous discharge, and then a lithium ion secondary battery having a discharge capacity of 2000 mAh or more at which a discharge voltage is 80% is judged as good.

(9) Productivity of battery production

A case in which a decrease in productivity due to breakage or the like is less than 10% in a series of operations of electrode agent application and winding is judged as good.

(10) Battery life

A case in which batteries produced are repeatedly subjected to a charge/discharge test under the condition of 100°C and 10% in number of all the batteries withstand 500 degradation cycles or more until a short circuit occurs is judged as good.

[Example 1]

A polyphenylene sulfide resin having Tg of 95°C and Tm of 285°C and calcium carbonate particles having an average particle size of 0.6 μm were melt-kneaded with a twin screw extruder to prepare a masterbatch having a calcium carbonate particle concentration of 4000 ppm. This masterbatch was dried and crystallized, then melt-extruded through a slit-shaped die, and brought into close contact with a rotary cooling drum having a surface temperature of 30°C using an electrostatic pinning method, and rapidly cooled and solidified, affording an un-stretched sheet.

The un-stretched sheet was sequentially biaxially stretched at a stretching temperature of 100°C at a stretch ratio of 3.3 in the machine direction and at a stretch ratio of 3.8 in the transverse direction. Subsequently, the film was once cooled and then subjected to a constant-length heat treatment at 250°C for 30 seconds, affording a biaxially stretched film having a thickness of 5.0 um. The tensile elongation at break of the resulting biaxially stretched film was as shown in Table 1.

Both surfaces of the biaxially stretched film were subjected to copper sputtering, and lithium cobalt oxide was applied thereon, affording a positive electrode material. Both surfaces of that biaxially stretched film were subjected to aluminum vapor-deposition, and graphite was applied thereon, affording a negative electrode material. The electrode materials were wound with a separator made of polyethylene microporous film interposed therebetween, and a lithium ion secondary battery was produced using a solution prepared by dissolving lithium hexafluorophosphate in an ethylene carbonate/diethyl carbonate/ethyl acetate mixed solvent as an electrolytic solution. The capacity of the resulting battery and the productivity during a series of steps were as shown in Table 1.

[Examples 2 and 3]

Film formation and battery production were performed in the same manner as in Example 1 except that the thickness was changed as shown in Table 1.

[Example 4]

Film formation and battery production were performed in the same manner as in Example 1 except that the heat treatment after biaxial stretching was changed to 260°C.

[Example 5]

Film formation and battery production were performed in the same manner as in Example 2 except that the heat treatment after biaxial stretching was changed to 240°C and 60 seconds.

[Examples 6 and 7]

Film formation and battery production were performed in the same manner as in Example 1 except that the content of calcium carbonate was changed as shown in Table 1.

[Example 8]

Film formation and battery production were performed in the same manner as in Example 1 except that calcium carbonate was changed to 0.5 um silica.

[Example 9]

Film formation and battery production were performed in the same manner as in Example 1 except that the MD stretch ratio was changed to 2.3 and the TD stretch ratio was changed to 2.8.

[Comparative Example 1]

Film formation and battery production were performed in the same manner as in Example 1 except that the film formation was performed by sequential biaxial stretching at a stretch ratio of 2.0 in the machine direction and at a stretch ratio of 3.5 in the transverse direction and the ratio of tensile elongation at break (SMD/STD) was 0.39.

[Comparative Example 2]

Film formation and battery production were performed in the same manner as in Example 1 except that the film formation was performed by sequential biaxial stretching at a stretch ratio of 4.5 in the transverse direction and the ratio of tensile elongation at break (SMD/STD) was 5.67.

[Comparative Example 3]

Film formation and battery production were performed in the same manner as in Example 1 except that the film formation was performed by sequential biaxial stretching at a stretch ratio of 2.5 in the machine direction and the ratio of tensile elongation at break (SMD/STD) was 1.51.
The capacity of the resulting batteries obtained in Comparative Examples 1, 2, and 3 and the productivity during a series of steps were as shown in Table 1. In the batteries of Comparative Examples 1 and 2, since the elongation at break of the substrate film in each of the machine direction and the transverse direction was excessively low, the ratio of the tensile elongation at break (SMD/STD) was out of the range of the present invention, and the battery productivity was low due to a trouble that the film was broken at the time of producing the batteries.
In the battery of Comparative Example 3, since the difference in elongation at break between the MD and TD directions was excessively large, the ratio of the tensile elongation at break (SMD/STD) was out of the range of the present invention, wrinkles and folds occurred during winding, and the battery productivity was low.

[Comparative Example 4]

Film formation and battery production were performed in the same manner as in Example 1 except that the heat shrinkage rate of the biaxially stretched film at 180°C for 30 minutes was changed to 12% in both the MD and TD directions.

The capacity of the resulting lithium ion secondary battery and the productivity during a series of the steps were as shown in Table 1. Since this battery had an excessively high heat shrinkage rate, a short circuit was caused by thermal deformation of the electrodes when heat generation occurred due to internal resistance, and the battery life was insufficient.

[Comparative Example 5]

Film formation and battery production were performed in the same manner as in Example 1 except that the thickness of the biaxially stretched film was set to 40 μm.

The capacity of the resulting lithium ion secondary battery and the productivity during a series of the steps were as shown in Table 2. In this battery, since the film serving as an electrode material substrate was excessively thick, the battery capacity was insufficient.

[Comparative Example 6]

Film formation and battery production were performed in the same manner as in Example 1 except that polyphenylene sulfide was changed to polyethylene terephthalate.

The capacity of the battery, the productivity during a series of the steps, and the battery life were as shown in Table 1. In this battery, since polyethylene terephthalate was dissolved in the electrolytic solution, a short circuit easily occurred and the battery life was low.

[Table 1]

| | | | Example 1 | Example 2 | Example 3 | Example 4 | Example 5 | Example 6 | Example 7 | Example 8 | Example 9 |
|---|---|---|---|---|---|---|---|---|---|---|---|
| | | Particles | Calcium carbonate | Calcium carbonate | Calcium carbonate | Calcium carbonate | Calcium carbonate | Calcium carbonate | Calcium carbonate | Silica | Calcium carbonate |
| | | Particle size μm | 0.6 | 0.6 | 0.6 | 0.6 | 0.6 | 0.6 | 0 . 6 | 0.5 | 0.6 |
| | | Addition concentration | 4000 | 4000 | 4000 | 4000 | 4000 | 2000 | 6000 | 4000 | 4000 |
| MD1 ratio | | | 3.3 | 3.3 | 3.3 | 3.3 | 3.3 | 3.3 | 3.3 | 3.3 | 2.3 |
| MD1 stretching temperature | | | 98.0 | 98.0 | 98.0 | 98.0 | 98.0 | 98.0 | 98.0 | 98.0 | 98.0 |
| TD1 ratio | | | 3.8 | 3.8 | 3.8 | 3.8 | 3.8 | 3.8 | 3.8 | 3.8 | 2.8 |
| TD1 preheating temperature | | | 100.0 | 100.0 | 100.0 | 100.0 | 100.0 | 100.0 | 100.0 | 100.0 | 100.0 |
| TD stretching temperature | | | 100.0 | 100.0 | 100.0 | 100.0 | 100.0 | 100.0 | 100.0 | 100.0 | 100.0 |
| TD relaxation rate | | | 5.0 | 5.0 | 5.0 | 5.0 | 5.0 | 5.0 | 5.0 | 5.0 | 5.0 |
| Heat setting temperature | | | 250 | 250 | 250 | 260 | 240 | 250 | 250 | 250 | 250 |
| | Thickness | (um) | 5.0 | 10.0 | 20.0 | 5.0 | 10.0 | 5.0 | 5.0 | 5.0 | 10.0 |
| Tensile elongation at break | MD | (%) | 70 | 64 | 73 | 60 | 71 | 70 | 65 | 70 | 125 |
| | TD | (%) | 60 | 55 | 62 | 51 | 73 | 59 | 61 | 60 | 120 |
| | SMD/STD | | 1.17 | 1.16 | 1.18 | 1.18 | 0.98 | 1.19 | 1.06 | 1.17 | 1.04 |
| Young's modulus | MD | (Mpa) | 4235 | 4158 | 4123 | 4334 | 4280 | 4317 | 3977 | 4235 | 3678 |
| | TD | (Mpa) | 4232 | 4138 | 4180 | 4331 | 4260 | 4407 | 4085 | 4232 | 3960 |
| | YMD/YTD | | 1.00 | 1.00 | 0.99 | 1.00 | 1.00 | 0.98 | 0.97 | 1.00 | 0.93 |

| | | Particles | Example 1 | Example 2 | Example 3 | Example 4 | Example 5 | Example 6 | Example 7 | Example 8 | Example 9 |
|---|---|---|---|---|---|---|---|---|---|---|---|
| | | | Calcium carbonate | Calcium carbonate | Calcium carbonate | Calcium carbonate | Calcium carbonate | Calcium carbonate | Calcium carbonate | Silica | Calcium carbonate |
| Heat shrinkage rate: 180°C, 30 min | MD | (%) | 2.7 | 2.8 | 2.6 | 1.9 | 3.5 | 2.7 | 2.2 | 2.7 | 3.9 |
| | TD | (%) | 1.5 | 1.7 | 1.9 | 0.9 | 2.2 | 1.5 | 0.5 | 1.5 | 2.6 |
| Surface roughness | SRa | (nm) | 11 | 17 | 13 | 11 | 20 | 9 | 29 | 29 | 17 |
| | SRz | (nm) | 392 | 308 | 274 | 392 | 474 | 268 | 385 | 833 | 308 |
| | Srz/Sra | | 35.5 | 17.8 | 21.3 | 35.5 | 23.2 | 31.2 | 13.4 | 28.8 | 17.8 |
| DSC melting peak | | (°C) | 285 | 285 | 285 | 285 | 285 | 285 | 285 | 285 | 285 |
| Battery capacity | | | ○ | ○ | ○ | ○ | ○ | ○ | ○ | ○ | ○ |
| Productivity of battery production | | | ○ | ○ | ○ | ○ | ○ | ○ | ○ | ○ | ○ |
| Battery life | | | ○ | ○ | ○ | ○ | ○ | ○ | ○ | ○ | ○ |
| Air-Leakage | F | (sec) | 136 | 110 | 106 | 136 | 110 | 147 | 112 | 80 | 110 |
| Density | | (g/cm3) | 1.3450 | 1.3458 | 1.3472 | 1..3∧90 | 1.3478 | 1.3450 | 1.3487 | 1.3450 | 1.3420 |

[Table 2]

| | | | Comparative Example 1 | Comparative Example 2 | Comparative Example 3 | Comparative Example 4 | Comparative Example 5 | Comparative Example 6 |
|---|---|---|---|---|---|---|---|---|
| | | Particles | Calcium carbonate | Calcium carbonate | Calcium carbonate | Calcium carbonate | Calcium carbonate | |
| | | Particle size $\mu$m | 0.6 | 0.6 | 0.6 | 0.6 | 0.6 | |
| | | Addition concentration | 4000 | 4000 | 4000 | 4000 | 4000 | |
| MD1 ratio | | | 2.0 | 3.3 | 2.5 | 3.3 | 3.3 | |
| MD1 stretching temperature | | | 98.0 | 98.0 | 98.0 | | 98.0 | |
| TD1 ratio | | | 3.5 | 4.5 | 3.8 | 3.8 | 3.8 | |
| TD1 preheating temperature | | | 100.0 | 100.0 | 100.0 | 100.0 | 100.0 | |
| TD stretching temperature | | | 100.0 | 100.0 | 100.0 | 100.0 | 100.0 | |
| TD relaxation rate | | | 5.0 | 5.0 | 5.0 | 5.0 | 5.0 | |
| Heat setting temperature | | | 250 | 250 | 250 | 220 | 250 | |
| | Thickness | ($\mu$m) | 5.0 | 5.0 | 5.0 | 5.0 | 40.0 | 5.0 |
| Tensile elongation at break | MD | (%) | 14 | 51 | 90 | 63 | 73 | 130 |
| | TD | (%) | 36 | 9 | 60 | 56 | 62 | 121 |
| | SMD/STD | | 0.39 | 5.67 | 1.51 | 1.13 | 1.18 | 1.07 |
| Young's modulus | MD | (Mpa) | 2910 | 4495 | 4235 | 4495 | 4123 | 4399 |
| | TD | (Mpa) | 4380 | 4399 | 4232 | 4499 | 4180 | 5000 |
| | YMD/YTD | | 0.66 | 1.02 | 1.00 | 1.00 | 0. 99 | 0.88 |
| Heat shrinkage rate: 180°C, 30 min | MD | (%) | 1.6 | 3.5 | 2.7 | 12.9 | 2.6 | 10.0 |
| | TD | (%) | 2.0 | 2.2 | 1.5 | 12.1 | 1.9 | 13.0 |

(continued)

| | | | Comparative Example 1 | Comparative Example 2 | Comparative Example 3 | Comparative Example 4 | Comparative Example 5 | Comparative Example 6 |
|---|---|---|---|---|---|---|---|---|
| | | Particles | Calcium carbonate | Calcium carbonate | Calcium carbonate | Calcium carbonate | Calcium carbonate | |
| Surface roughness | SRa | (nm) | 13 | 16 | 11 | 16 | 13 | 29 |
| | SRz | (nm) | 420 | 324 | 392 | 324 | 274 | 833 |
| | Srz/Sra | | 32.3 | 20.8 | 35.5 | 20.8 | 21.3 | 28.8 |
| DSC melting peak | | (°C) | 285 | 285 | 285 | 285 | 285 | 255 |
| Battery capacity | | | ○ | ○ | ○ | ○ | × | O |
| Productivity of battery production | | | × | × | × | ○ | ○ | ○ |
| Battery life | | | ○ | ○ | ○ | × | ○ | × |
| Air-Leakage | F | (sec) | | 156 | 136 | 156 | 106 | 80 |
| Density | | (g/cm3) | 1.3450 | 1.3450 | 1.3450 | 1.3358 | 1.3472 | 1.3950 |

INDUSTRIAL APPLICABILITY

The present invention can provide a secondary battery electrode and a film to be used for the electrode, the electrode is superior in heat resistance, capable of thinning a thin metal film, and capable of affording a required battery capacity, having an improved life, and being lighter than conventional products due to use of a film as a substrate.

**Claims**

1. A polyphenylene sulfide film comprising at least one layer being formed of a composition includes a polyphenylene sulfide resin, wherein

   the polyphenylene sulfide film has a thickness of 0.2 um or more and 30 um or less,
   the polyphenylene sulfide film has a tensile elongation at break of 30% or more and 150% or less in each of an MD direction and a TD direction,
   a relationship between the tensile elongation at break in the MD direction and the tensile elongation at break in the TD direction satisfies a formula (1), and
   the polyphenylene sulfide film has a heat shrinkage rate at 180°C for 30 minutes of 4% or less in both the MD direction and the TD direction,

$$0.75 \leq SMD/STD \leq 1.25 \qquad (1)$$

   in the formula (1), SMD represents the tensile elongation at break in the MD direction, and STD represents the tensile elongation at break in the TD direction.

2. The polyphenylene sulfide film according to claim 1, wherein

   the composition further includes inert particles,
   the inert particles are contained in an amount of 500 ppm or more and 20000 ppm or less based on a weight of the polyphenylene sulfide resin, and
   both surfaces of the polyphenylene sulfide film have a center surface average roughness SRa of 5 nm or more and 70 nm or less and a ten-point average roughness SRz of 200 nm or more and 950 nm or less, and SRa and SRz satisfy a formula (2).

$$10 \leq SRz/SRa \leq 50 \qquad (2)$$

3. The polyphenylene sulfide film according to claim 1 or 2, wherein

   a Young's modulus in the MD direction and a Young's modulus in the TD direction are each 3500 MPa or more and 5500 MPa or less, and
   a relationship between the Young's modulus in the MD direction and the Young's modulus in the TD direction satisfies a formula (3),

$$0.75 \leq YMD/YTD \leq 1.25 \qquad (3)$$

   in the formula (3), YMD represents the Young's modulus in the MD direction and YTD represents the Young's modulus in the TD direction.

4. The polyphenylene sulfide film according to any one of claims 1 to 3, having a density of 1.340 g/dl or more.

5. The polyphenylene sulfide film according to any one of claims 1 to 4, wherein the polyphenylene sulfide film has a melting peak temperature in DSC measurement of 250°C or higher.

6. A secondary battery electrode film, further comprising a thin metal film on at least one surface of the polyphenylene sulfide film according to any one of claims 1 to 5.

7. A secondary battery electrode, wherein the secondary battery electrode film according to claim 6 further includes an electrode material.

**INTERNATIONAL SEARCH REPORT**

| International application No. |
| --- |
| PCT/JP2021/023086 |

A.    CLASSIFICATION OF SUBJECT MATTER
C08J 5/18(2006.01)i; B29C 55/12(2006.01)i; H01M 4/64(2006.01)i; H01M 4/66(2006.01)i
FI: C08J5/18 CEZ; H01M4/64 A; H01M4/66 A; B29C55/12

According to International Patent Classification (IPC) or to both national classification and IPC

B.    FIELDS SEARCHED

Minimum documentation searched (classification system followed by classification symbols)
C08J5/18; B29C55/12; H01M4/64; H01M4/66

Documentation searched other than minimum documentation to the extent that such documents are included in the fields searched
| | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

C.    DOCUMENTS CONSIDERED TO BE RELEVANT

| Category* | Citation of document, with indication, where appropriate, of the relevant passages | Relevant to claim No. |
| --- | --- | --- |
| X | JP 2011-140151 A (TORAY INDUSTRIES, INC.) 21 July 2011 (2011-07-21) entire text, in particular, claims, paragraphs [0014]-[0016], [0037]-[0038], [0044]-[0074] | 1, 2, 5 |
| X | WO 2019/176756 A1 (TORAY INDUSTRIES, INC.) 19 September 2019 (2019-09-19) entire text, in particular, claims, paragraphs [0044]-[0075] | 1, 5 |
| X | WO 2008/139989 A1 (TORAY INDUSTRIES, INC.) 20 November 2008 (2008-11-20) entire text, in particular, claims, paragraphs [0042]-[0045], [0064]-[0067], [0078]-[0104] | 1, 2, 5-7 |
| X | WO 2007/049571 A1 (TORAY INDUSTRIES, INC.) 03 May 2007 (2007-05-03) entire text, in particular, claims, paragraphs [0045]-[0052], [0087]-[0110] | 1-5 |

| ☐ | Further documents are listed in the continuation of Box C. | ☒ | See patent family annex. |
| --- | --- | --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 27 August 2021 (27.08.2021) | 07 September 2021 (07.09.2021) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2021/023086

| Patent Documents referred in the Report | Publication Date | Patent Family | Publication Date |
|---|---|---|---|
| JP 2011-140151 A | 21 Jul. 2011 | (Family: none) | |
| WO 2019/176756 A1 | 19 Sep. 2019 | TW 201945196 A | |
| WO 2008/139989 A1 | 20 Nov. 2008 | US 2010/0209712 A1 entire text, in particular, claims, paragraphs [0040]-[0043], [0058]-[0061], [0094]-[0132] EP 2153974 A1 CN 101678604 A KR 10-2010-0017711 A | |
| WO 2007/049571 A1 | 03 May 2007 | US 2009/0142566 A1 entire text, in particular, claims, paragraphs [0059]-[0066], [0106]-[0137] US 2013/0310503 A1 EP 1942149 A1 CN 101300304 A KR 10-2008-0047599 A | |

Form PCT/ISA/210 (patent family annex) (January 2015)

**EP 4 174 117 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10040919 A

- JP 10040920 A